(19) Europäisches Patentamt / European Patent Office / Office européen des brevets

(11) **EP 4 592 110 A1**

(12) **EUROPEAN PATENT APPLICATION**
published in accordance with Art. 153(4) EPC

(43) Date of publication:
**30.07.2025 Bulletin 2025/31**

(21) Application number: **23881769.6**

(22) Date of filing: **23.10.2023**

(51) International Patent Classification (IPC):
**B60J 1/00** (2006.01)　　**B62D 25/04** (2006.01)
**G02B 5/00** (2006.01)

(86) International application number:
**PCT/CN2023/125862**

(87) International publication number:
**WO 2024/088191 (02.05.2024 Gazette 2024/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.10.2022　CN 202211303145**

(71) Applicant: **Fuyao Glass Industry Group Co., Ltd.**
**Fuqing, Fujian 350300 (CN)**

(72) Inventors:
• CHEN, An
　Fujian 350300 (CN)
• TONG, Zhiqiang
　Fujian 350300 (CN)
• WANG, Li
　Fujian 350300 (CN)
• LIU, Chunxin
　Fujian 350300 (CN)

(74) Representative: **Mewburn Ellis LLP**
**Aurora Building**
**Counterslip**
**Bristol BS1 6BX (GB)**

(54) **VEHICLE PILLAR ASSEMBLY AND VEHICLE**

(57) The disclosure provides a vehicle pillar assembly and a vehicle. The vehicle pillar assembly includes a glass panel and an optical sensor. The glass panel defines a signal transmission window, the optical sensor corresponds to the signal transmission window and is disposed on one side of the glass panel, and the optical sensor is configured to receive an optical signal transmitted through the signal transmission window. The glass panel has a first curvature radius in a first direction and a second curvature radius in a second direction. The first direction is perpendicular to the second direction, and an extension line of the first direction and an extension line of the second direction pass through a geometric center of the glass panel, where a ratio of the first curvature radius to the second curvature radius is a bending coefficient of the glass panel, and the bending coefficient ranges from 0 to 0.3. By adjusting the bending coefficient of the glass panel, serious optical distortion of the optical signal received by the optical sensor through the signal transmission window is avoided, thereby eliminating or reducing ghost image and distortion of images recognized by the optical sensor, and improving the recognition accuracy of the optical sensor.

FIG. 1

EP 4 592 110 A1

**Description**

This application claims priority to Chinese Patent Application No. 202211303145.X, filed October 24, 2022, and entitled "VEHICLE PILLAR ASSEMBLY AND VEHICLE", the entire disclosure of which is incorporated herein by reference.

TECHNICAL FIELD

The present disclosure relates to the field of vehicle-part-manufacturing technology, and in particular to a vehicle pillar assembly and a vehicle.

BACKGROUND

Vehicles are one of the important transportation means for people. At present, there are more and more sensors integrated into vehicles, including cameras with functions such as surround view, facial recognition, intelligent driving, and sentinel mode, and these cameras recognize images of external environment of the vehicle for analysis. Cameras are usually installed under glass panels. During the manufacturing process of glass of the glass panel, uneven curved surfaces and profile deviations may exist. Curved modelling and optical distortion of the glass panel may affect the recognition accuracy of a camera system, resulting in problems such as ghost image and distortion in the recognized images.

SUMMARY

The disclosure provides a vehicle pillar assembly, which is able to solve the technical problems of ghost image and distortion in images recognized through a glass panel.

In a first aspect, the disclosure provides a vehicle pillar assembly, including a glass panel and an optical sensor. The glass panel defines a signal transmission window, the optical sensor corresponds to the signal transmission window and is disposed on one side of the glass panel, and the optical sensor is configured to receive an optical signal transmitted through the signal transmission window. The glass panel has a first curvature radius in a first direction and a second curvature radius in a second direction. The first direction is perpendicular to the second direction, and an extension line of the first direction and an extension line of the second direction pass through a geometric center of the glass panel, where a ratio of the first curvature radius to the second curvature radius is a bending coefficient of the glass panel, and the bending coefficient ranges from 0 to 0.3.

By adjusting the bending coefficient of the glass panel, serious optical distortion of the optical signal received by the optical sensor through the signal transmission window is avoided, thereby eliminating or reducing ghost image and distortion of images recognized by the optical sensor, and improving the recognition accuracy of the optical sensor.

Optionally, the first curvature radius is greater than or equal to 1050mm, and a variation range of a maximum and a minimum of the first curvature radius is less than or equal to 10%; and the second curvature radius is greater than or equal to 10000mm, and a variation range of a maximum and a minimum of the second curvature radius is less than or equal to 10%.

Optionally, a thickness of the glass panel ranges from 0.7mm to 5.0mm.

Optionally, a ratio of a width of the glass panel to a length of the glass panel ranges from 0.3 to 0.6.

Optionally, a ratio of a width of the signal transmission window to a width of the glass panel is less than 0.3.

Optionally, a ratio of a length of the signal transmission window to a length of the glass panel is less than 0.2.

Optionally, the bending coefficient satisfies the following formula:

$$\frac{Rv}{Rh} = -a - b\frac{L2}{L1} + c\frac{W1}{L1} + d\frac{W2}{W1}$$

where $Rv$ is the first curvature radius, $Rh$ is the second curvature radius, $L1$ is a length of the glass panel, $L2$ is a length of the signal transmission window, $W1$ is a width of the glass panel, $W2$ is a width of the signal transmission window, and $a, b, c,$ and $d$ each are constant coefficients.

Optionally, an optical distortion of the optical signal received by the optical sensor through the signal transmission window is less than 110 millidiopters (mdpt), and a double image of the optical signal received by the optical sensor through the signal transmission window is less than or equal to 8 arc minutes (arcmin).

In a second aspect, the disclosure further provides a vehicle. The vehicle includes a sheet metal and the vehicle pillar assembly of the first aspect. The sheet metal is configured to support the vehicle pillar assembly.

BRIEF DESCRIPTION OF THE DRAWINGS

In order to describe technical solutions of embodiments of the disclosure more clearly, the following will give a brief introduction to the accompanying drawings used for describing the embodiments. Apparently, the accompanying drawings hereinafter described are some embodiments of the present disclosure. Based on these drawings, those of ordinary skill in the art can also obtain other drawings without creative effort.

FIG. 1 is a schematic top view of a vehicle pillar assembly provided in an embodiment of the disclosure.

FIG. 2 is a schematic side view of a vehicle pillar assembly provided in an embodiment of the disclosure.

FIG. 3 is a schematic view of a relationship between secondary image separation angles and curvature radii of a glass panel provided in an embodiment of the disclosure.

FIG. 4 is a schematic view of a relationship between secondary image separation angles and thicknesses of a glass panel provided in an embodiment of the disclosure.

FIG. 5 is a schematic top view of a B-pillar assembly provided in an embodiment of the disclosure.

FIG. 6 is a schematic cross-sectional view of FIG. 5, taken along line I-I.

FIG. 7 is a schematic top view of a vehicle provided in an embodiment of the disclosure.

Description of reference signs of the accompanying drawings: first direction - D1, second direction - D2, vehicle pillar assembly - 1, glass panel - 11, optical sensor - 12, signal transmission window - 13, ink layer - 14, body - 21, groove - 22, vehicle - 3, sheet metal - 31.

DETAILED DESCRIPTION

The following will illustrate technical solutions of embodiments of the disclosure with reference to the accompanying drawings of embodiments of the disclosure. Apparently, embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

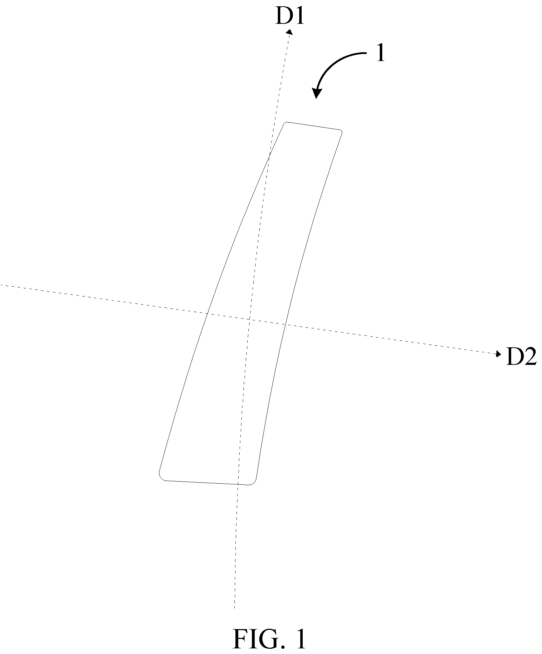

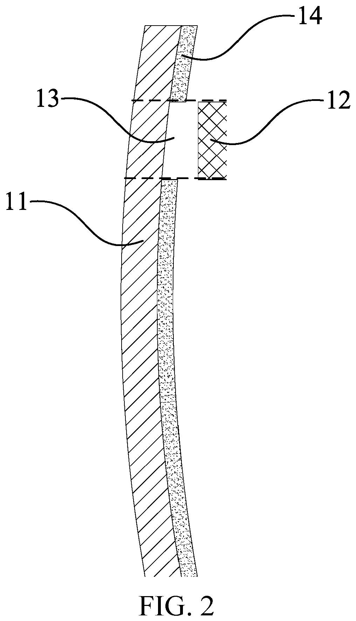

The disclosure provides a vehicle pillar assembly 1, and reference is made to FIG. 1 and FIG. 2. FIG. 1 is a schematic top view of a vehicle pillar assembly provided in an embodiment of the disclosure. FIG. 2 is a schematic side view of a vehicle pillar assembly provided in an embodiment of the disclosure. The vehicle pillar assembly 1 includes a glass panel 11 and an optical sensor 12. The glass panel 11 defines a signal transmission window 13. The optical sensor 12 corresponds to the signal transmission window 13 and is disposed on one side of the glass panel 11. The optical sensor 12 is configured to receive an optical signal transmitted through the signal transmission window 13. The glass panel 11 has a first curvature radius in a first direction D1 and a second curvature radius in a second direction D2. The first direction D1 is perpendicular to the second direction D2. An extension line of the first direction D1 and an extension line of the second direction D2 pass through a geometric center of the glass panel 11. A ratio of the first curvature radius to the second curvature radius is a bending coefficient of the glass panel 11. The bending coefficient ranges from 0 to 0.3.

It may be noted that, as vehicles develop to be more intelligent and multifunctional, the number of sensors integrated into vehicles is increasing. Most of the functions require image acquisition. That is, the arrangement of the optical sensor 12 is needed. In order to protect the optical sensor 12 and other electronic components, the optical sensor 12 and other electronic components are usually disposed on the inner side of the glass panel 11. An optical signal is received through the signal transmission window 13 on the glass panel 11, and a desired image is recognized. However, curved modelling and optical distortion of the glass panel 11 may affect the transmission of the optical signal, thereby reducing the recognition accuracy of the optical sensor 12.

In this embodiment, the vehicle pillar assembly 1 may be any one or more of A-pillars, B-pillars, or C-pillars of a vehicle. The A-pillars are pillars on both sides of the windshield, the B-pillars are pillars between front doors and rear doors of a vehicle, and the C-pillars are pillars between the roof and the body of a vehicle.

Specifically, for the purpose of covering other components under the glass panel 11, the vehicle pillar assembly 1 usually includes an ink layer 14 as illustrated in FIG. 2. The ink layer 14 is disposed on one surface of the glass panel 11 adjacent to the optical sensor 12, and the ink layer 14 is not disposed on a portion of the glass panel 11 corresponding to the signal transmission window 13, allowing the optical sensor 12 to receive the optical signal through the signal transmission window 13.

It may be understood that, when the optical signal passes through a surface having a curvature radius, such as a convex lens or a concave lens, refraction phenomena such as scattering or convergence occur. Similarly, in order to fit in the appearance of the vehicle, the surface of the glass panel 11 usually has a curvature radius. When the optical signal is emitted into the optical sensor 12 through the glass panel 11, refraction phenomena occur, causing optical distortion and double image of images received by the optical sensor 12.

Specifically, the main reason of optical distortion lies in the curvature radius of the surface of the glass panel 11. Optical distortion of the glass panel 11 may be measured in millidiopters (mdpt) based on Regulation No 43 of the Economic Commission for Europe of the United Nations (ECE R43). A more serious optical distortion corresponds to a larger diopter. In addition, the diopter of optical distortion of the glass panel 11 is related to the first curvature radius or the second curvature radius. An excessive separation angle between a primary image and a secondary image is the main cause of double image. A secondary image separation angle is calculated using the following formula:

$$\eta = \frac{2t'}{R_c} \frac{\sin \varphi}{\sqrt{n^2 - \sin^2 \varphi}}$$

where $\eta$ is a secondary image separation angle, t' is a thickness of the glass panel 11 at an incident point of the optical signal, $R_c$ is a curvature radius of the glass panel 11 at an incident point of the optical signal, $\varphi$ is an incident angle between the optical signal and the glass panel 11, and $n$ is a refractivity of the glass panel 11. The refractivity of the glass is a fixed value of 1.52, and the incident angle of the light is mainly related to the optical sensor 12. Therefore, in this embodiment, the first curvature radius and the second curvature radius of the glass panel 11 are mainly adjusted, thereby addressing problems of optical distortion and double image of images received by the optical sensor 12.

Normally, the first direction D1 is the vertical direction, and the second direction D2 is the horizontal direction. In order to fit in the appearance of the vehicle, the curvature radii of the glass panel 11 in the first direction D1 and the second direction D2 are different. In this embodiment, by reasonably controlling the first curvature radius and the second curvature radius, the ratio of the first curvature radius to the second curvature radius (i.e., the bending coefficient) is maintained within the range of 0-0.3, thereby effectively addressing problems of optical distortion and double image of images received by the optical sensor 12.

It may be understood that, in this embodiment, by adjusting the bending coefficient of the glass panel 11, serious optical distortion of the optical signal received by the optical sensor 12 through the signal transmission window 13 is avoided, thereby eliminating or reducing ghost image and distortion of images recognized by the optical sensor 12, and improving the recognition accuracy of the optical sensor 12.

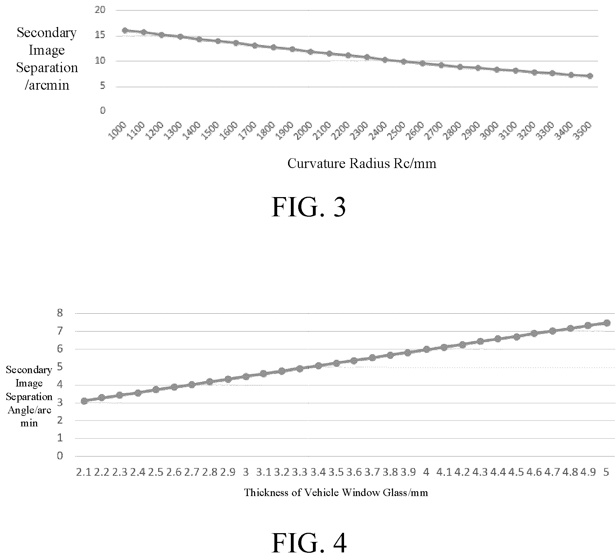

In a possible embodiment, reference is made to FIG. 3, which is a schematic view of a relationship between secondary image separation angles and curvature radii of a glass panel provided in an embodiment of the disclosure. The first curvature radius is greater than or equal to 1050mm, and a variation range of a maximum and a minimum of the first curvature radius is less than or equal to 10%. The second curvature radius is greater than or equal to 10000mm, and a variation range of a maximum and a minimum of the second curvature radius is less than or equal to 10%.

Specifically, as illustrated in FIG. 3, the secondary image separation angle is negatively correlated with the curvature radius of the glass panel 11. That is, when the first curvature radius and/or the second curvature radius of the glass panel 11 is larger, the secondary image separation angle is smaller. In this way, the problem of double image of images received by the optical sensor 12 may be addressed.

It may be understood that, in order to fit in the appearance of the vehicle, the glass panel 11 needs to have a certain curvature radius. In this embodiment, the first curvature radius is greater than or equal to 1050mm, and the second curvature radius is greater than or equal to 10000mm. The first curvature radius may be 1100mm, 1310mm, 1500mm, 1579mm, etc., and the second curvature radius may be 10100mm, 10684mm, 12300mm, 14701mm, etc., which are not limited in the disclosure.

It may be noted that, there may be uneven surfaces of the glass panel 11 during the preparation of the glass panel 11. Therefore, curvature radii at any two positions on the same surface of the glass panel 11 are not necessarily the same. Therefore, the variation range of the maximum and the minimum of the first curvature radius specifically refers to a ratio of the difference between the maximum and the minimum of the first curvature radius to the first curvature radius of the glass panel 11 in the first direction D1, that is, the rate of change of the first curvature radius. Similarly, the variation range of the maximum and the minimum of the second curvature radius specifically refers to a ratio of the difference between the maximum and the minimum of the second curvature radius to the second curvature radius of the glass panel 11 in the second direction D2, that is, the rate of change of the second curvature radius.

Specifically, the diopter of optical distortion of the glass panel 11 is also related to the rate of change of the first curvature radius and the second curvature radius. The diopter of optical distortion of the glass panel 11 is positively correlated with the curvature radius of the glass panel 11. Therefore, in this embodiment, the variation range of the maximum and the minimum of the first curvature radius is less than or equal to 10%, and the variation range of the maximum and the minimum of the second curvature radius is less than or equal to 10%.

In a possible embodiment, reference is made to FIG. 4, which is a schematic view of a relationship between secondary image separation angles and thicknesses of a glass panel provided in an embodiment of the disclosure. The thickness of the glass panel 11 ranges from 0.7mm to 5.0mm.

Specifically, as illustrated in FIG. 4, the secondary image separation angle is positively correlated with the thickness of the glass panel 11, which means that a smaller thickness of the glass panel 11 corresponds to a smaller secondary image separation angle. Therefore, by adjusting the thickness of the glass panel 11 within the range of 0.7mm-5.0mm, the problem of double image of images received by the optical sensor 12 may be effectively addressed. In this embodiment, the thickness of the glass panel 11 may be 0.9mm, 2.4mm, 3.6mm, 4.1mm, etc., which is not limited in the disclosure.

It may be understood that, in other possible embodiments, in general, the minimum thickness of a tempered glass is required to be 3.0mm, and a glass panel 11 thinner than 3.0mm can only be processed into a heat-strengthened glass. Therefore, the thickness of the glass panel 11 may range from 3.0mm to 5.0mm, allowing the glass panel 11 to be processed into tempered glass, which may be used as exterior glass of vehicles, thereby expanding the application of the glass panel 11. Specifically, the thickness of the glass panel 11 may be 3.3mm, 3.7mm, 4.2mm, 4.8mm, etc., which is not limited in the disclosure.

In a possible embodiment, a ratio of the width of the glass panel 11 to the length of the glass panel 11 ranges from 0.3 to 0.6.

Specifically, the glass panel 11 usually has width and length specifications. The length of the glass panel 11 is the length of the glass panel 11 in the first direction D1, and the width of the glass panel 11 is the length of the glass panel 11 in the second direction D2. It may be understood that, the length and the width of the glass panel 11 will also affect the first curvature radius and the second curvature radius of the glass panel 11, that is, affect the bending coefficient of the glass panel 11, and in turn affect the transmission of the optical signal in the glass panel 11.

It may be understood that, in this embodiment, the glass panel 11 is applied to a B-pillar of a vehicle, and the glass panel 11 that fits in the B-pillar is approximately of a rectangular shape. Therefore, the ratio of the width to the length of the glass panel 11 is relatively small. Correspondingly, the first curvature radius is relatively small, and the second curvature radius is relatively large. Specifically, the ratio of the width to the length of the glass panel 11 may be 0.35, 0.44, 0.51, 0.58, etc., which is not limited in the disclosure.

In a possible embodiment, a ratio of the width of the signal transmission window 13 to the width of the glass panel 11 is less than 0.3.

Specifically, the signal transmission window 13 usually has width and length specifications. The length of the signal transmission window 13 is the length of the signal transmission window 13 in the first direction D1, and the width of the signal transmission window 13 is the length of the signal transmission window 13 in the second direction D2. It may be understood that, the length and the width of the signal transmission window 13 will affect the angle of the optical signal received by the optical sensor 12. Therefore, by adjusting the length and width of the signal transmission window 13, the desired first curvature radius and the desired second curvature radius may be indirectly obtained.

It may be understood that, in this embodiment, the ratio of the width of the signal transmission window 13 to the width of the glass panel 11 is less than 0.3. In this way, the second curvature radius may be indirectly adjusted to a required value, which ensures that the bending coefficient ranges from 0 to 0.3. Specifically, the ratio of the width of the signal transmission window 13 to the width of the glass panel 11 may be 0.29, 0.23, 0.11, 0.07, etc., which is not limited in the disclosure.

In a possible embodiment, a ratio of the length of the signal transmission window 13 to the length of the glass panel 11 is less than 0.2.

It may be understood that, the difference between this embodiment and the previous embodiment is that by adjusting the ratio of the length of the signal transmission window 13 to the length of the glass panel 11, the first curvature radius may be indirectly adjusted to a required value, ensuring that the bending coefficient ranges from 0 to 0.3. Specifically, the ratio of the length of the signal transmission window 13 to the length of the glass panel 11 may be 0.18, 0.15, 0.13, 0.08, etc., which is not limited in the disclosure.

It may be noted that, the glass panel 11 is approximately of a rectangular shape, and the signal transmission window 13 has a corresponding shape, which is a shape where the length in the first direction D1 is greater than the width in the second direction D2. This shape allows the first curvature radius and the second curvature radius to be indirectly adjusted to a required value in a better way.

In this embodiment, the signal transmission window 13 is of an elliptical shape. It may be understood that in other possible embodiments, the shape of the signal transmission window 13 may also be a shape where the length in the first direction D1 is greater than the width in the second direction D2, such as a rectangle, a diamond, a triangle, etc., which is not limited in the disclosure.

In a possible embodiment, the bending coefficient satisfies the following formula.

$$\frac{Rv}{Rh} = -a - b\frac{L2}{L1} + c\frac{W1}{L1} + d\frac{W2}{W1}$$

where $Rv$ is the first curvature radius, Rh is the second curvature radius, $L1$ is a length of the glass panel, $L2$ is a length of the signal transmission window, $W1$ is a width of the glass panel, $W2$ is a width of the signal transmission window, and $a$, $b$, $c$, and $d$ each are constant coefficients.

Specifically, a regression equation may be used to calculate a relationship between the bending coefficient and the ratio of the width of the glass panel 11 to the length of the glass panel 11, a relationship between the bending coefficient and the ratio of the length of the signal transmission window 13 to the length of the glass panel 11, and a relationship between the bending coefficient and the ratio of the length of the signal transmission window 13 to the length of the glass panel 11. Based on these relationships, the bending coefficient may be directly or indirectly adjusted, so as to address the problems of optical distortion and double image of images received by the optical sensor 12.

In this embodiment, $a$ is 0.048, $b$ is 3.79, $c$ is 0.876, and $d$ is 0.846. It may be understood that, in other possible embodiments, $a$, $b$, $c$, and $d$ each may be other values, which is not limited in the disclosure.

In a possible embodiment, an optical distortion of the optical signal received by the optical sensor 12 through the signal transmission window 13 is less than 110mdpt, and a double image of the optical signal received by the optical sensor 12 through the signal transmission window 13 is less than or equal to 8 arc minutes (arcmin).

Specifically, in the disclosure, seven groups of experiments in each of which the optical sensor 12 receives the optical signal through the signal transmission window 13 are designed, and the relevant experimental data is recorded as illustrated in table 1 and table 2. Group 5, group 6, and group 7 are control groups.

Table 1 Image recognition experimental data sheet

| Serial number | Glass area/m² | Glass length $L1$/mm | Glass width $W1$/mm | $W1/L1$ | Window area/m² | Window length $L2$/mm | Window width $W2$/mm | Window width-to-length ratio $W2/L2$ | $L2/L1$ |
|---|---|---|---|---|---|---|---|---|---|
| 1 | 0.054 | 471 | 216 | 0.46 | 0.001 | 37 | 29 | 0.78 | 0.08 |
| 2 | 0.049 | 396 | 205 | 0.52 | 0.002 | 56.5 | 39 | 0.69 | 0.14 |
| 3 | 0.059 | 443.5 | 236.5 | 0.53 | 0.001 | 43 | 18 | 0.42 | 0.10 |
| 4 | 0.05 | 474 | 202 | 0.43 | 0.002 | 48 | 40.2 | 0.84 | 0.10 |
| 5 | 0.012 | 220 | 190 | 0.86 | 0.001 | 28.6 | 23.2 | 0.81 | 0.13 |
| 6 | 0.065 | 450 | 350 | 0.78 | 0.001 | 48 | 35 | 0.73 | 0.11 |
| 7 | 0.08 | 600 | 400 | 0.67 | 0.001 | 45 | 36 | 0.80 | 0.08 |

Table 2 Image recognition experimental data sheet

| Serial number | $W2/W1$ | Bending coefficient $Rv/Rh$ | Optical distortion <110mdpt | Double image <=8arcmin |
|---|---|---|---|---|
| 1 | 0.13 | 0.1696 | 9.4mdpt | 6.5arcmin |
| 2 | 0.19 | 0.0257 | 24.65mdpt | 2.0arcmin |
| 3 | 0.08 | 0.1161 | 8.1mdpt | 6.0arcmin |
| 4 | 0.20 | 0.1099 | 3.0mdpt | 7.0arcmin |
| 5 | 0.12 | 0.3191 | 120mdpt | 10arcmin |
| 6 | 0.10 | 0.3137 | 115mdpt | 9arcmin |
| 7 | 0.09 | 0.3279 | 125mdpt | 11arcmin |

As illustrated in the above table 1 and table 2, the glass panel 11 that meets the corresponding conditions enables that the optical distortion of the optical signal received by the optical sensor 12 through the signal transmission window 13 is less than 110mdpt, and the double image of the optical signal received by the optical sensor 12 through the signal transmission window 13 is less than or equal to 8arcmin, thereby effectively improving the recognition accuracy of the optical sensor 12. Since values of $L2/L1$, $W1/L1$, and $W2/W1$ are in an unreasonable range, according to the formula of the bending coefficient, the bending coefficient of group 5 may be calculated as 0.3191, which exceeds the range of the bending coefficient, resulting in a final optical distortion to be about 120mdpt and a double image to be about 10arcmin. The optical distortion and the double image of group 5 both exceed a threshold range. According to the formula of the bending coefficient, the bending coefficient of group 6 may be calculated as 0.3137, which exceeds the range of the bending coefficient, resulting in a final optical distortion to be about 115mdpt and a double image to be about 9arcmin. The optical distortion and the double image of group 6 both exceed a threshold range. According to the formula of the bending coefficient, the bending coefficient of group 7 may be calculated as 0.3279, which exceeds the range of the bending coefficient, resulting in a final optical distortion to be about 125mdpt and a double image to be about 11arcmin. The optical distortion and the double image of group 7 both exceed a threshold range. In other words, in the control experiments of group 5, group 6, and group 7, the glass panel 11 affects the recognition accuracy of the optical sensor 12.

As for the experimental data of group 1, group 2, group 3, and group 4, values of $L2/L1$, $W1/L1$, and $W2/W1$ are in a reasonable range, enabling that the bending coefficients in group 1, group 2, group 3, and group 4 are less than 0.3, all of which are within a reasonable range. As a result, the optical distortions are all less than 110mdpt, and the double images are all less than or equal to 8arcmin, thereby improving the recognition accuracy of the optical sensor 12.

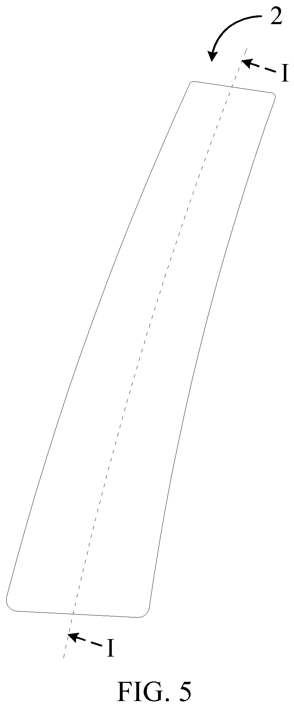

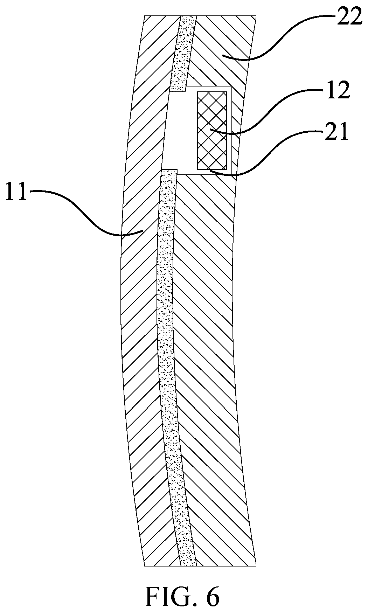

For example, the disclosure further provides a B-pillar assembly 2, and reference is made to FIG. 5 and FIG. 6. FIG. 5 is a schematic top view of a B-pillar assembly provided in an embodiment of the disclosure. FIG. 6 is a schematic cross-sectional view of FIG. 5, taken along line I-I. The B-pillar assembly 2 includes a body 21 and the vehicle pillar assembly 1 as described above. The vehicle pillar assembly 1 is disposed on one side of the body 21. A groove 22 is defined on the body 21 and is configured for fixing the optical sensor 12. Specifically, for the description of the vehicle pillar assembly 1, please refer to the above description, which will not be repeated herein.

It may be understood that, in other possible embodiments, the vehicle pillar assembly 1 may be disposed on other portions of a vehicle 3, as long as it does not affect the adjustment of the bending coefficient of the glass panel 11. By adjusting the bending coefficient of the glass panel 11, serious optical distortion of the optical signal received by the optical sensor 12 through the signal transmission window 13 is avoided, thereby eliminating or reducing ghost image and distortion of images recognized by the optical sensor 12, and improving the recognition accuracy of the optical sensor 12. The disclosure does not limit the arrangement of the vehicle pillar assembly 1.

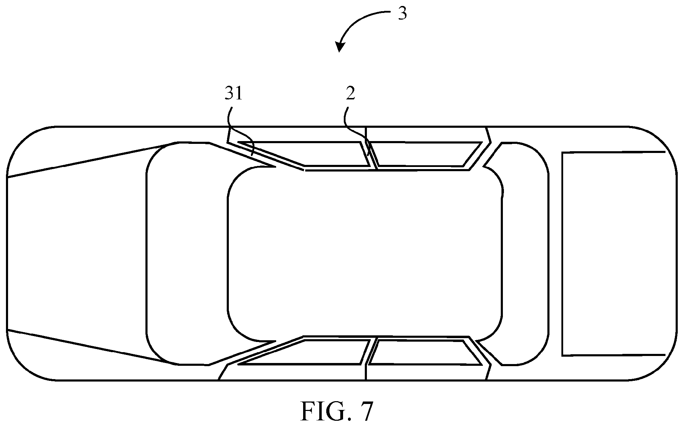

The disclosure further provides a vehicle 3, and reference is made to FIG. 7, which is a schematic top view of a vehicle provided in an embodiment of the disclosure. The vehicle 3 includes a sheet metal 31 and the B-pillar assembly 2 described above. The sheet metal 31 is configured to support the B-pillar assembly 2. Specifically, for the description of the B-pillar 2, please refer to the above description, which will not be repeated herein.

It may be understood that, in this embodiment, by adjusting the bending coefficient of the glass panel 11, serious optical distortion of the optical signal received by the optical sensor 12 through the signal transmission window 13 is avoided, thereby eliminating or reducing ghost image and distortion of images recognized by the optical sensor 12, and improving the recognition accuracy of the optical sensor 12, which is beneficial for driving and implementation of related functions of the vehicle 3.

The principles and embodiments of the present disclosure are elaborated with specific examples herein. The above illustration of embodiments is only used to help understand core ideas of the present disclosure. At the same time, for those ordinary skill in the art, according to ideas of the present disclosure, there will be changes in specific embodiments and application scope. In conclusion, contents of this specification should not be understood as a limitation on the present disclosure.

**Claims**

1. A vehicle pillar assembly, comprising a glass panel and an optical sensor, wherein the glass panel defines a signal transmission window, the optical sensor corresponds to the signal transmission window and is disposed on one side of the glass panel, and the optical sensor is configured to receive an optical signal transmitted through the signal transmission window; and the glass panel has a first curvature radius in a first direction and a second curvature radius in a second direction, the first direction is perpendicular to the second direction, and an extension line of the first direction and an extension line of the second direction pass through a geometric center of the glass panel, wherein a ratio of the first curvature radius to the second curvature radius is a bending coefficient of the glass panel, and the bending coefficient ranges from 0 to 0.3.

2. The vehicle pillar assembly of claim 1, wherein the first curvature radius is greater than or equal to 1050mm, and a variation range of a maximum and a minimum of the first curvature radius is less than or equal to 10%; and the second curvature radius is greater than or equal to 10000mm, and a variation range of a maximum and a minimum of the second curvature radius is less than or equal to 10%.

3. The vehicle pillar assembly of claim 1, wherein a thickness of the glass panel ranges from 0.7mm to 5.0mm.

4. The vehicle pillar assembly of claim 1, wherein a ratio of a width of the glass panel to a length of the glass panel ranges from 0.3 to 0.6.

5. The vehicle pillar assembly of claim 1, wherein a ratio of a width of the signal transmission window to a width of the glass panel is less than 0.3.

6. The vehicle pillar assembly of claim 1, wherein a ratio of a length of the signal transmission window to a length of the glass panel is less than 0.2.

7. The vehicle pillar assembly of claim 1, wherein the bending coefficient satisfies the following formula:

$$\frac{Rv}{Rh} = -a - b\frac{L2}{L1} + c\frac{W1}{L1} + d\frac{W2}{W1}$$

wherein Rv is the first curvature radius, Rh is the second curvature radius, $L$1 is a length of the glass panel, L2 is a length of the signal transmission window, $W$1 is a width of the glass panel, $W$2 is a width of the signal transmission window, and $a, b, c,$ and $d$ each are constant coefficients.

8. The vehicle pillar assembly of claim 1, wherein an optical distortion of the optical signal received by the optical sensor through the signal transmission window is less than 110 millidiopters (mdpt), and a double image of the optical signal received by the optical sensor through the signal transmission window is less than or equal to 8 arc minutes (arcmin).

9. The vehicle pillar assembly of claim 1, further comprising an ink layer, wherein the ink layer is disposed on one surface of the glass panel adjacent to the optical sensor, and the ink layer is not disposed on a portion of the glass panel corresponding to the signal transmission window.

10. A vehicle, comprising a sheet metal and the vehicle pillar assembly in any one of claims 1 to 9, wherein the sheet metal is configured to support the vehicle pillar assembly.

D1

1

D2

FIG. 1

FIG. 2

Secondary
Image
Separation
/arcmin

Curvature Radius Rc/mm

# FIG. 3

Secondary
Image
Separation
Angle/arc
min

2.1 2.2 2.3 2.4 2.5 2.6 2.7 2.8 2.9  3  3.1 3.2 3.3 3.4 3.5 3.6 3.7 3.8 3.9  4  4.1 4.2 4.3 4.4 4.5 4.6 4.7 4.8 4.9  5

Thickness of Vehicle Window Glass/mm

# FIG. 4

2

I

I

FIG. 5

FIG. 6

FIG. 7

## INTERNATIONAL SEARCH REPORT

| International application No. |
| --- |
| **PCT/CN2023/125862** |

### A. CLASSIFICATION OF SUBJECT MATTER

B60J1/00(2006.01)i; B62D25/04(2006.01)i; G02B5/00(2006.01)i

According to International Patent Classification (IPC) or to both national classification and IPC

### B. FIELDS SEARCHED

Minimum documentation searched (classification system followed by classification symbols)

IPC: B60J B62D G02B

Documentation searched other than minimum documentation to the extent that such documents are included in the fields searched

Electronic data base consulted during the international search (name of data base and, where practicable, search terms used)

CNTXT; CNKI; VEN; ENTXT; ENTXTC; WPABS; WPABSC: 车辆, 曲率半径, 弯曲系数, 垂直, 水平, 横向, 纵向, 长度, 宽度, 方向, 厚度, 畸变, 重影, 失真, vehicle, HUD, curvature, vertical, horizontal, length, width, direction, thickness, aberration, distortion

### C. DOCUMENTS CONSIDERED TO BE RELEVANT

| Category* | Citation of document, with indication, where appropriate, of the relevant passages | Relevant to claim No. |
| --- | --- | --- |
| PX | CN 115598750 A (FUYAO GLASS INDUSTRY GROUP CO., LTD.) 13 January 2023 (2023-01-13)<br>claims 1-10 | 1-10 |
| Y | CN 112193031 A (FUYAO GLASS INDUSTRY GROUP CO., LTD.) 08 January 2021 (2021-01-08)<br>description, paragraphs [0002]-[0066], and figures 1-8 | 1-10 |
| Y | CN 201209132 Y (FUYAO GLASS INDUSTRY GROUP CO., LTD.) 18 March 2009 (2009-03-18)<br>description, page 1, line 2 to page 3, line 12, and figures 1-5 | 1-10 |
| Y | CN 114815263 A (FUYAO GLASS INDUSTRY GROUP CO., LTD.) 29 July 2022 (2022-07-29)<br>description, paragraphs [0002]-[0129], and figures 1-7 | 1-10 |
| Y | JP 2016168996 A (NIPPON SHEET GLASS CO., LTD.) 23 September 2016 (2016-09-23)<br>description, paragraphs [0002]-[0187], and figures 1-35 | 1-10 |

☑ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 December 2023** | **11 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/125862** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2020046679 A (MAXELL HOLDINGS LTD. et al.) 26 March 2020 (2020-03-26)<br>entire document | 1-10 |

**INTERNATIONAL SEARCH REPORT**
Information on patent family members

International application No.

**PCT/CN2023/125862**

| Patent document cited in search report | | | Publication date (day/month/year) | Patent family member(s) | Publication date (day/month/year) |
|---|---|---|---|---|---|
| CN | 115598750 | A | 13 January 2023 | None | |
| CN | 112193031 | A | 08 January 2021 | None | |
| CN | 201209132 | Y | 18 March 2009 | None | |
| CN | 114815263 | A | 29 July 2022 | None | |
| JP | 2016168996 | A | 23 September 2016 | None | |
| JP | 2020046679 | A | 26 March 2020 | JP 7018922 B2 | 14 February 2022 |

Form PCT/ISA/210 (patent family annex) (July 2022)

**EP 4 592 110 A1**

**Patent documents cited in the description**

- CN 202211303145X